# EUROPEAN PATENT SPECIFICATION

(11) **EP 0 561 602 B1**
(45) Date of publication and mention of the grant of the patent: **14.02.1996**
(21) Application number: 93301968.9
(22) Date of filing: 16.03.1993
(51) Int. Cl.: B60J 3/00

(54) **Sun visor with vanity mirror**
Sonnenblende mit einem Kosmetikspiegel
Pare-soleil avec un miroir de courtoisie

(30) Priority: 17.03.1992 JP 92208/92
(43) Date of publication of application: 22.09.1993
(73) Proprietor: NEO-EX LAB. INC., Toyota-shi, Aichi-ken (JP)
(72) Inventor: Miwa, Norimichi, Toyota-shi, Aichi-ken (JP)
(74) Representative: Senior, Alan Murray

(56) References cited:
- EP-A- 0 157 919
- EP-A- 0 265 404
- EP-A- 0 314 652
- EP-A- 0 403 846
- US-A- 4 764 852
- US-A- 4 909 562
- US-A- 4 947 296

## Description

### Background of the Invention

The present invention relates to a sun visor with vanity mirror for use with an automobile.

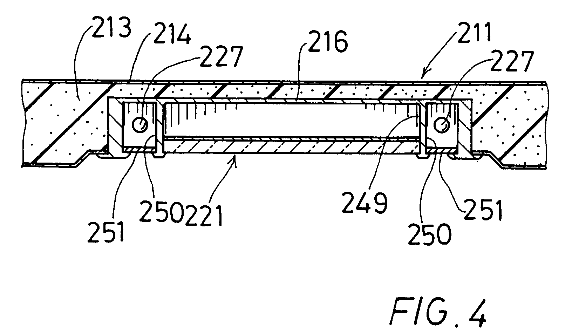

As shown in FIG. 4, a known sun visor with vanity mirror generally includes a plate-like main body 211. The main body 211 has a plate-like base member 213 and an outer shell member 214 encapsulating the base member 213. The main body 211 has a vanity mirror 221 provided on one surface thereof. The vanity mirror 221 is of an ordinary mirror and is received in a mirror installation cavity 249 centrally formed on a mirror tray 216 which is embedded in the main body 211. The main body 211 is also provided with illumination lamps 227 which are positioned in lamp installation cavities 250 formed on side portions of the mirror tray 216. The lamp installation cavities 250 are covered with light transmittable semi-transparent covers 251.

A problem usually associated with the prior art sun visor with vanity mirror is that since the illumination lamps 227 are positioned in the lamp installation cavities 250 separated from the mirror installation cavity 249, the covers 251 have to be used for shielding the illumination lamps 227 positioned in the lamp installation cavities 250, thereby rendering the construction of the sun visor complicated and causing undesirable awkward appearance of an area around the vanity mirror 221.

EP-A-0,157,919 discloses a sun visor with vanity mirror according to the preamble of claim 1.

It is an object of the invention to provide a sun visor with vanity mirror in which the problems associated with the conventional sun visor are eliminated, that is, to provide a sun visor with vanity mirror having a simplified construction and having a good appearance.

According to the present invention, there is provided a sun visor with vanity mirror comprising: a main body having a pair of opposed surfaces; a mirror tray provided on one of the surfaces of the main body; a vanity mirror received in the mirror tray; an illumination lamp provided in the mirror tray; and light reflecting means provided in the mirror tray so as to reflect light from the illumination lamp; characterised in that: the vanity mirror includes a light transmittable semi-transparent mirror and a backing layer applied on the inner surface of the semi-transparent mirror, the backing layer being partly removed to form a light transmitting area on the vanity mirror; the illumination lamp is provided at a position behind the backing layer; and the light reflecting means is positioned to reflect light from the illumination lamp toward and through the light transmitting area.

An important feature of the present invention is that since a rover for shielding the illumination lamp is not required, the construction of the sun visor is effectively simplified, thereby offering the advantage that the sun visor exhibits a good appearance.

Further developments in line with claim 1 are referred to in the dependent claims 2 to 5.

The present invention will become more fully apparent from the claims and the description as it proceeds in connection with the drawings.

### Brief Description of the Drawings

FIG. 1 is a partially sectional view of a sun visor according to a first embodiment of the present invention;
FIG. 2 is an elevational view in section of the sun visor;
FIG. 3 is a partially sectional view of a sun visor according to a second embodiment of the present invention; and
FIG. 4 is a partially sectional view of a conventional sun visor.

### Detailed Description of the Preferred Embodiment

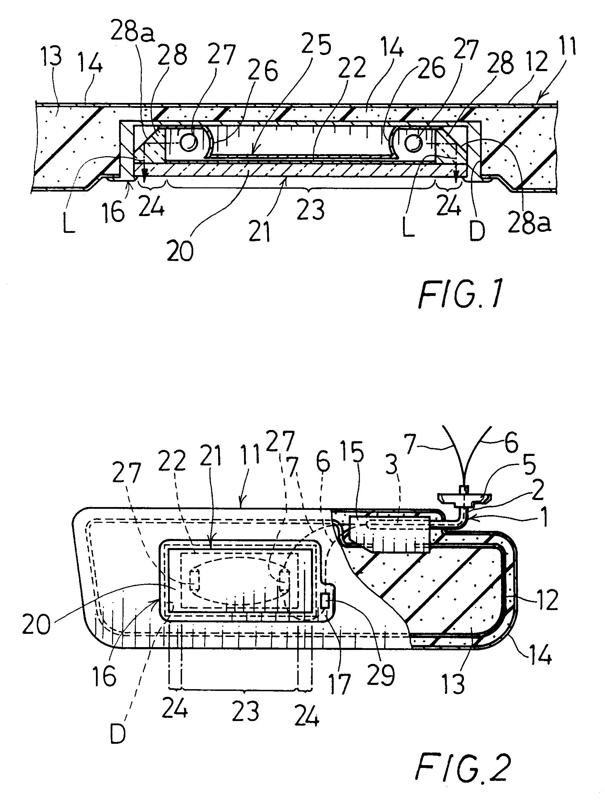

Referring now to FIGS. 1 and 2, shown therein is a sun visor with vanity mirror according to a first embodiment of the present invention.

As shown in FIG. 2, the sun visor includes a plate-like main body 11 and an L-shaped arm 1 for mounting the main body 11 on an automobile body (not shown).

The arm 1 has a lateral portion 3 and a vertical portion 2 and has a mounting plate 5 connected to the vertical portion 2. The mounting plate 5 is adapted to be fixed to the automobile body.

The main body 11 has a plate-like base member 13 reinforced by an annular frame member 12 and an outer shell member 14 encapsulating the base member 13. The base member 13 is formed of a resilient material and has a supporting member 15 embedded therein. The supporting member 15 is positioned at a corner of the base member 13 and is associated with the frame member 12. The supporting member 15 has an insertion bore (not shown) into which the lateral portion 3 of the arm 1 is rotatably inserted. The main body 11 as constructed above is mounted on the automobile body by fixing the mounting plate 5 to the automobile body.

The main body 11 includes a pair of opposed surfaces and has a vanity mirror 21 provided on one of the surfaces. The vanity mirror 21 is received in a rectangular mirror tray 16 fitted into a depressed portion D formed on the main body 11. As will be easily understood, the depressed portion D is formed by removing a part of the outer shell member 14 and the base member 13.

The vanity mirror 21 is comprised of a light transmittable semi-transparent mirror 20 and a backing layer 22 applied on the inner surface thereof. The backing layer 22 is partly removed at the side end portions of the semi-transparent mirror 20. Thus, the vanity mirror 21 as constructed includes a central mirror area 23 and side light transmitting areas 24. The backing layer 22 is formed of an adhesive tape or painting which is dark and opaque.

As shown in FIG. 1, a pair of illumination lamps 27 are provided in the mirror tray 16 so as to be positioned in the rearward portion of the backing layer 22. The illumination lamps 27 are supported by a retainer frame 25 which is mounted in the mirror tray 16 so as to be positioned in the rearward portion of the backing layer 22. The retainer frame 25 has a pair of concave light reflecting member 26 integrally formed on the ends thereof. The light reflecting member 26 have focal points on which the illumination lamps 27 are arranged.

As shown in FIG. 1, a pair of prisms 28 are provided in the mirror tray 16 so as to be located closely to the light transmitting areas 24 of the vanity mirror 21. The prisms 28 have reflecting surfaces 28a to reflect the light L emitted by the illumination lamps 27. The prisms 28 are arranged so as to lead the light L reflected on the reflecting surface 28a toward the light transmitting areas 24 of the vanity mirror 21.

As shown in FIG. 2, a pair of leads 6, 7 extending from a battery (not shown) are inserted into the arm 1. The leads 6, 7 are introduced into the mirror tray 16 and connected to the illumination lamps 27. The lead 6 is connected to a switch 29 fixed to a flanged portion 17 which is formed on the peripheral edge of the mirror tray 16.

The operation of the sun visor thus constructed will now be explained.

To shade sunlight, the main body 11 of the sun visor is downwardly rotated through a desired angle around the lateral portion 3 of the arm 1 to a desired position.

To use the vanity mirror 21, the main body 11 is also downwardly rotated through a desired angle around the lateral portion 3 of the arm 1.

In the nighttime, the switch 29 can be turned on to light the illumination lamps 27. The light L emitted by the lamps 27 is directly lead to the prisms 28 or is lead thereto after reflected by the light reflectable members 26. The light L is reflected on the reflecting surfaces 28a of the prisms 28 and subsequently lead toward the light transmitting areas 24 of the vanity mirror 21. The light L lead to the light transmitting area 24 is projected therefrom to partly illuminate the interior of the automobile body.

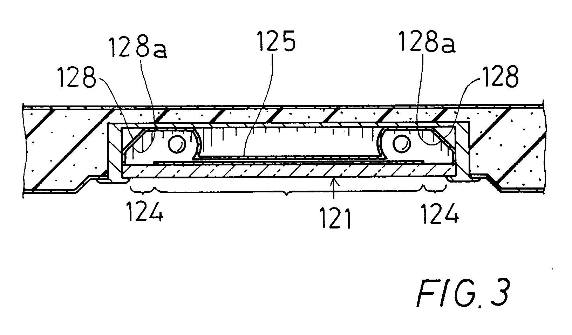

A second embodiment modified from the first embodiment of the present invention will now be described with reference to FIG. 3, wherein only parts different from those shown in FIGS. 1 and 2 will be explained.

As shown in FIG. 3, a pair of reflecting plates 128 having reflecting surfaces 128a are used instead of the prisms 28 in the first embodiment. The reflecting plates 128 are integrally formed with a retainer flame 125. The reflecting plates 128 are arranged so that the reflecting surfaces 128a incline at an angle of 45° to light-transmitting areas 124 of a vanity mirror 121.

The modified sun visor is operated substantially in the same manner as the sun visor in FIGS. 1 and 2. Therefore, the explanation of the operation of the modified sun visor will be omitted.

The preferred embodiments as described above ran be further modified. For example, although in the preferred embodiments, the light transmitting area is formed on each side of the vanity mirror, such light transmitting area can be formed on one side of the vanity mirror. Further, the light transmitting area ran be circumferentially formed on the vanity mirror.

The preferred embodiments herein described are intended to be illustrative of the invention and not to limit the invention to the precise form herein described. They are chosen and described to explain the principles of the invention and their application and practical use to enable others skilled in the art to practice the invention as defined in the claims.

## Claims

1. A sun visor with vanity mirror comprising:
a main body (13) having a pair of opposed surfaces;
a mirror tray (16) provided on one of said surfaces of said main body;
a vanity mirror (23) received in said mirror tray;
an illumination lamp (27) provided in said mirror tray; and
light reflecting means (28) provided in said mirror tray so as to reflect light from said illumination lamp;
characterised in that:
said vanity mirror includes a light transmittable semi-transparent mirror (21) and a backing layer (22) applied on the inner surface of said semi-transparent mirror, said backing layer being partly removed to form a light transmitting area (24) on said vanity mirror;
said illumination lamp is provided at a position behind said backing layer (22); and
said light reflecting means is positioned to reflect light from said illumination lamp toward and through said light transmitting area (24).

2. A sun visor as defined in claim 1, wherein said light reflecting means comprises a prism (18) mounted on said light transmitting area.

3. A sun visor as defined in claim 1, wherein said light reflecting means comprises a reflecting plate (128) having a reflecting surface inclining at an angle of 45° to said light-transmitting area.

4. A sun visor as defined in claim 1, 2 or 3, further comprising a concave light reflecting member (26) to reflect the light from said illumination lamp (27) toward said light reflecting means (28).

5. A sun visor according to any preceding claim, with two lamps (27), located adjacent opposite ends of said mirror (23).

## Patentansprüche

1. Sonnenblende mit einem Kosmetikspiegel und mit
einem Hauptkörper (13) mit einem Paar gegenüberliegender Flächen,
einer Spiegelschale (16), die an einer der genannten Flächen des Hauptkörpers vorgesehen ist,
einem Kosmetikspiegel (23), der in dieser Spiegelschale vorgesehen ist,
einer Lampe (27) für die Beleuchtung, die in dieser Spiegelschale vorgesehen ist und
mit lichtreflektierenden Elementen (28), die in dieser Spiegelschale vorgesehen sind, um Licht der Lampe zu reflektieren,
**dadurch gekennzeichnet,**
daß der Kosmetikspiegel einen lichtdurchlässigen semi-transparenten Spiegel (21) und eine Rückschicht (22) auf der Innenfläche des genannten semi-transparenten Spiegels aufweist, wobei diese Rückschicht teilweise entfernt ist, so daß eine lichtdurchlässige Fläche (24) auf dem Kosmetikspiegel vorhanden ist,
daß die Lampe hinter der Rückschicht (22) angeordnet ist
und daß die genannten lichtreflektierenden Elemente so angeordnet sind, daß sie Licht von der Lampe in Richtung und durch die genannte lichtdurchlässige Fläche (24) reflektieren.

2. Sonnenblende nach Anspruch 1, bei der die genannten lichtreflektierenden Elemente ein Prisma (18) aufweisen, das auf dieser genannten lichtdurchlässigen Fläche angeordnet ist.

3. Sonnenblende nach Anspruch 1, bei der die genannten lichtreflektierenden Elemente eine Reflektionsplatte (128) aufweisen, die unter einem Winkel von 45° bezüglich der lichtdurchlässigen Fläche mit einer reflektierenden Fläche versehen ist.

4. Sonnenblende nach Anspruch 1, 2 oder 3, die weiterhin ein konkaves lichtreflektierendes Teil (26) für die Reflektion des Lichtes der genannten Lampe (27) in Richtung der genannten lichtreflektierenden Elemente (28) aufweist.

5. Sonnenblende nach einem der vorhergehenden Ansprüche, mit zwei Lampen (27), die angrenzend an gegenüberliegenden Enden des Spiegels (23) liegen.

## Revendications

1. Pare-soleil avec miroir de courtoisie, comprenant :
un corps principal (13) ayant une paire de faces opposées ;
un porte-miroir (16) prévu sur l'une desdites faces dudit corps principal ;
un miroir de courtoisie (23) logé dans ledit porte-miroir ;
une lampe d'éclairage (27) prévue dans ledit porte-miroir ; et
un moyen réfléchissant la lumière (28) prévu dans ledit porte-miroir de manière à réfléchir la lumière venant de ladite lampe d'éclairage ; caractérisé en ce que :
ledit miroir de courtoisie comprend un miroir semi-transparent (21), propre à transmettre la lumière, et une couche envers (22) appliquée sur la surface interne dudit miroir semi-transparent, ladite couche envers étant en partie retirée pour former une zone de transmission de lumière (24) sur ledit miroir de courtoisie ;
ladite lampe d'éclairage est prévue dans un emplacement derrière ladite couche envers (22) ; et
ledit moyen réfléchissant la lumière est placé de manière à réfléchir de la lumière, venant de ladite lampe d'éclairage, en direction de ladite zone de transmission de lumière (24) et à travers celle-ci.

2. Pare-soleil selon la revendication 1, dans lequel ledit moyen réfléchissant la lumière comprend un prisme (18) monté sur ladite zone de transmission de lumière.

3. Pare-soleil selon la revendication 1, dans lequel ledit moyen réfléchissant la lumière comprend une plaque réflectrice (128) ayant une surface réfléchissante s'inclinant selon un angle de 45° par rapport à ladite zone de transmission de lumière.

4. Pare-soleil selon la revendication 1, 2 ou 3, comprenant en outre un élément concave réfléchissant la lumière (26) afin de réfléchir la lumière, venant de ladite lampe d'éclairage (27), en direction dudit moyen réfléchissant la lumière (28).

5. Pare-soleil selon l'une quelconque des revendications précédentes, comportant deux lampes (27), situées adjacentes aux extrémités opposées dudit miroir (23).
